# EUROPEAN PATENT APPLICATION

(11) **EP 4 817 855 A1**
(43) Date of publication of application: **07.10.2026**
(21) Application number: 25168360.3
(22) Date of filing: 03.04.2025
(51) Int. Cl.: B29C 73/10, F03D 1/06

(54) **METHOD FOR REPAIRING A WIND TURBINE BLADE, REPAIR PATCH AND WIND TURBINE BLADE**

(71) Applicant: Siemens Gamesa Renewable Energy A/S, 7330 Brande (DK)
(72) Inventor: Quispitupa Yupa, Amilcar, 9200 Aalborg (DK); Jones, Harry Llywelyn, 31600 Burlada (ES); Garmabi, Mehdi, 9000 Aalborg (DK)
(74) Representative: SGRE-Association

(57) **Abstract**

The invention relates to a method for repairing a wind turbine blade (1) comprising a composite material shell (11) with a root section (12), wherein the root section (12) comprises circumferentially distributed fixation elements (2) arranged within the composite material shell (11). The fixation elements (2) are adapted for a connection of the wind turbine blade (1) to a hub (101) of a wind turbine (10). The composite material shell (11) shows a laminate damage (18) around at least one of the fixation elements (2). The method comprising the steps: a) providing a repair patch (3) comprising a contact surface (32) and at least one recess (31); b) placing the repair patch (3) on a surface (14,15) of the composite material shell (11) with the fixation element (2) protruding at least partially into the recess (31) of the repair patch (3) and c) adhering the repair patch (3) to the surface (14,15) of the composite material shell (11) to restore force transmission between the at least one of the fixation elements (2) and the composite material shell (11) by providing a load path through the repair patch (3). Further, a repair patch (3) for use in the method and a wind turbine blade (1) are disclosed.

## Description

The present invention relates to a method for repairing a wind turbine blade, to a repair patch for use in the method and to a wind turbine blade.

Typically, wind turbine blades are manufactured as hollow composite material shells by lamination of multiple layers of fiber material and usually comprise core materials such as plastic foam and/or balsa wood. The core materials are in particular placed between at least two neighboring layers of fiber material of a fiber material layup. The blades, especially for offshore use, continuously increase in size. Regarding the main dimensions current blades can reach root diameters up to 6 m, a blade length of well over 120 m while typical chord lengths can reach up to 7 m or even more. With the increased blade dimensions both the blade weight and the forces to be transmitted to the hub, respectively to the blade bearings, increase as well.

The connection of the blades to the hub, respectively to the blade bearings, is subject to extreme mechanical loads and therefore has to fulfil strict standards. It needs to be sufficiently robust to absorb static and dynamic operating forces, withstand cyclical loads and ensure stability over time.

Regardless of the dimensions of wind turbine blades, the mechanical fixation of hollow composite structures, such as those used in rotor blades, presents a significant challenge. The blades being made from composite materials like glass fiber and/or carbon fiber reinforced polymers, offers a good balance of strength, stiffness, and lightweight properties. However, securing these hollow structures mechanically is complex, especially under consideration of cyclical loads and tolerances during production.

A typical approach in the industry is that the blades are attached to the hub of the wind turbine, respectively to a blade bearing (e.g. providing for a blade pitch adjustment), by so called T-bolt connections. These T-bolt connections comprise a multitude of fixation elements in the form of barrel nuts provided within bores in the blade shell that are spaced about the circumference of the blade root. The barrel nuts each comprise a least one threaded fixation region that extends perpendicularly to a central axis of the barrel nut, wherein the threaded fixation region is aligned with a longitudinal bore in the blade shell that is open to the inboard end of the blade. Through the longitudinal bore a stud bolt is inserted that on one end is screwed into the threaded fixation region of the barrel nut and on the other end fixed to the hub or the blade bearing respectively. The barrel nuts received in the bores of the blade shell are in direct contact with the root laminate structure of the blade shell.

To ensure an efficient load transfer, the stud bolts are typically pre-tensioned, so that a firm contact is established both between the barrel nuts and the laminate structure of the blade shell and between a root face of the blade and the hub, respectively the blade bearing. Maintaining this firm contact is crucial for preserving an intended load path, which plays a key role in transmitting blade root loads to the hub - or to the blade bearing respectively - while ensuring the structural integrity of the blade.

Ensuring that the pretension applied to the stud bolts remains stable throughout the wind turbine's operational life is critical. Any reduction or loss of pretension can disrupt the intended load path, compromising the efficient transfer of forces and increasing the risk of premature component failures.

One cause of pretension loss is damage to the laminate structure in the root section at the contact interfaces with the barrel nuts. In the worst case, this can result in compressive damage and delamination around the contact interfaces, compromising the structural integrity and reducing the load-bearing capacity of the laminate.

When root laminate damage occurs, the integrity of the contact interfaces between the barrel nuts and the root laminate is compromised, leading to a gradual reduction in pretension forces within the stud bolts. As localized damage at the contact surface of certain barrel nuts develops, the neighboring stud bolts are subjected to increased stress levels. This elevated stress accelerates the failure process, allowing the root laminate damage to spread to adjacent barrel nuts.

If left unaddressed, this spreading damage can result in a critical number of broken stud bolts, greatly increasing the risk of catastrophic failure, such as blade loss. As the root laminate damage extends over a larger area, repairs become more complex, often requiring the blade to be removed from the wind turbine using a crane, with the repair work carried out off-tower-adding both operational complexity and cost.

It is one object of the present invention to provide a method for repairing a wind turbine blade, in particular while the blade remains installed at the wind turbine, that allows for a quick, efficient and durable repair of the aforementioned damages.

A further objective of the present invention is to provide a repair patch for use in a method for repairing a wind turbine blade, enabling the efficient, quick, and cost-effective repair of such damages.

According to a first aspect of the invention, a method for repairing a wind turbine blade is proposed. The wind turbine blade comprises a composite material shell with a root section, wherein the root section comprises multiple circumferentially distributed fixation elements arranged within the composite material shell. The fixation elements are adapted for a connection of the wind turbine blade to a hub or to a blade bearing, preferably at/of the hub, of a wind turbine. The composite material shell in particular shows at least one laminate damage around at least one of the fixation elements.

The method comprises the following steps:
a) providing a repair patch comprising a contact surface and at least one recess that corresponds to at least one dimension of the at least one of the fixation elements;
b) placing the repair patch on a surface of the composite material shell, wherein a central axis of the recess is aligned with a central axis of the at least one of the fixation elements with the fixation element protruding at least partially into the recess of the repair patch;
c) adhering the repair patch to the surface of the composite material shell to restore force transmission between the at least one of the fixation elements and the composite material shell by providing a load path through the repair patch.

Laminate damages around at least one of the fixation elements typically develop over an extended period of use and are caused by a combination of influencing factors, including cyclical loads and tolerances of the positioning and orientation (angle) of the fixation elements in the composite material shell that lead to differing effectively load carrying wall thicknesses on the inner side and outer side of the composite material shell. In other words, depending on the specific positioning and orientation of the fixation elements, a radially inner wall section or a radially outer wall section of the composite material shell may receive more load than the respective other wall section, which leads to premature laminate damage in the higher loaded wall section. Specifically, laminate damage involves a compromised laminate structure in which a certain number of composite layers have delaminated.

The dimensions of the laminate damage that can be repaired using the method according to the invention and/or the repair patch according to the invention may reach up to 50 mm, particularly up to 40 mm, in particular with regard to an extension on or parallel to the surface of the composite material shell. In principle, however, there are no restrictions regarding the dimensions of the laminate damage to be repaired.

The composite material shell may also comprise a tip section, at another end longitudinally opposing the root section.

That "at least one dimension of the recess corresponds to at least one dimension of the at least one of the fixation elements" in particular means that the mutual cross-sectional shapes and dimensions are matched so that a longitudinal section of the fixation element (with regards to a main direction of the fixation element) can be received fittingly, in particular with low or no play, in the recess.

The repair patch may be placed on the surface of the composite material shell with the respective fixation element in place or after a temporary removal of the respective fixation element.

The method according to the invention restores the integrity of the designed load path from the at least one of the fixation elements into the composite material shell. Once the repair patch is fully bonded to the composite material shell a portion of the load that is induced by the fixation element will pass through the repair patch and is then transferred to the composite material shell, in particular through the contact surface.

The repair patch may in particular comprise multiple layers of fiber webs laminated together. The fiber webs may comprise unidirectional and/or multidirectional fibers. The repair patch may be provided as a composite structure comprising a fiber-reinforced plastic material. However, the invention is explicitly not limited to repair patches made from a specific material. Rather, the invention also includes, for example, repair patches made of a solid material, for example a metallic solid material, such as metal plates.

An important advantage of the invention is that it does not require the use of complex, heavy and/or large machinery or tools and can therefore be carried out up-tower without the need for cranes, thus minimizing cost and downtime.

The method can be repeated at locations of other fixation elements, for example in case the composite material shell exhibits laminate damage around more than one of the fixation elements.

In embodiments, the method according to the invention may be executed as a preventive measure to prevent damage to the laminate of the composite shell, for example as a part of a predefined maintenance schedule for a wind turbine, in particular after a certain period of operation, e.g. after 8 to 12 years.

According to a further embodiment, the repair patch may be placed on an inner surface and/or an outer surface of the composite material shell.

According to yet a further embodiment the method may comprise step b1) Applying a hardenable adhesive to a repair region of the surface of the composite material shell, the repair region neighboring the at least one of the fixation elements and/or applying a hardenable adhesive to the contact surface of the repair patch. The hardenable adhesive can in particular comprise a 2K-adhesive (two component adhesive), in particular an epoxy-based adhesive. Step b1) may in particular be executed before step b).

In particular, the hardenable adhesive is in a flowable, liquid and/or paste-like state at application, so that it can be applied to the repair region of the composite material shell and/or the contact surface of the repair patch. Hardening might comprise a polymerization reaction between an epoxy resin (first component) and a hardener (second component) to form a plastic material, for example a thermosetting plastic material. The hardenable adhesive may in particular be selected to harden or cure under ambient conditions, for example within a temperature range of 8 °C to 35 °C. In particular, the hardenable adhesive may be selected to cure without the need for heating.

In embodiments, the application of hardenable adhesive can comprise an application the adhesive to a damaged volume inside the composite material shell adjacent to the at least one fixation element so that the adhesive fills the damaged volume and in particular restores structural integrity of the composite material shell. In other words, the application of adhesive is not necessarily limited to the surface. Depending on the failure mode, the laminate structure of the composite shell may be damaged under the respective inner and/or outer surfaces of the composite material shell to a certain depth and form a damaged volume in that the laminate structure has delaminated or is otherwise corrupted. By filling this damaged volume with the hardenable adhesive the volume can regain its load bearing capacity.

The repair region in particular corresponds to a localization of the laminate damage. In particular, the extension of the repair region on the surface of the composite material shell equals an extension of the laminate damage on the surface of the composite material shell or is larger.

The hardenable adhesive may be in particular applied with a cartridge gun or spray gun. Alternatively, the adhesive may be applied by brush application and/or by flooding the repair region with the adhesive.

According to another embodiment, the method may comprise step b2) processing a surface of the composite material shell in a repair region neighboring the at least one of the fixation elements, in particular wherein surface processing includes grinding the surface and/or the removal of damaged remains of a laminate structure of the composite material shell. Step b2) may in particular be executed before step b) and before step b1).

In step b2) at least a surface coating, paint and/or debris on the surface of the composite material shell is removed to improve the adhesion of the adhesive. By grinding the surface roughness is specifically increased in the repair region. The grinding is in particular performed in a way so that an underlying laminate structure of the composite material shell is not damaged.

After the repair is complete, i.e. after the adhesive has hardened and/or after step c), the repair region may be recoated with a surface coating (e.g. a paint or varnish) to improve resistance of the repaired blade region against environmental influences.

According to a further embodiment, the at least one of the fixation elements comprises at least one barrel nut, comprising a main body that is received in a respective receptacle within the composite material shell and at least one fixation region in the main body, in particular a threaded fixation region, the fixation region in particular extending perpendicular to the central axis of the barrel nut. Step b) in particular comprises receiving a projection section of the barrel nut that protrudes over a surface of the composite material shell in the recess of the repair patch.

The main body of the barrel nut can in particular have an essentially prismatic shape, in particular a right-prismatic shape. The main body of the barrel nut can in particular have an essentially cylindrical shape. The fixation region can be provided as a radial bore, in particular through-bore, in the main body, wherein the radial bore in particular comprises an internal thread. Typical diameters of the main body may reach from 30 mm to 80 mm. The receptacle in the composite material shell may in particular have a shape, in particular cross-sectional shape, that corresponds with the dimensions of the fixation element. The receptacle in the composite material shell in particular comprises a bore, in particular a radial bore, in particular a radial through-bore, that penetrates the composite material shell from the outer surface to the inner surface. The main body of the barrel nut may be essentially loosely inserted to the bore in the composite material shell and may be sealed against the respective inner and/or outer surfaces of the composite material shell with a sealant, in particular a permanently elastic sealant.

According to yet another embodiment, the method may comprise step
a1) providing a replacement barrel nut having a longer extension along the central axis than a barrel nut currently comprised by the at least one of the fixation elements and step a2) replacing the barrel nut with the replacement barrel nut, so that the replacement barrel nut protrudes over a surface of the composite material shell with the projection section. Steps a1) and a2) are in particular executed before step b). In Embodiments, steps a1) and a2) are also executed before steps b1) and b2). In Embodiments, steps a1) and a2) are executed after step a).

The replacement barrel nut may be essentially loosely inserted into a respective receptacle within the composite material shell, in particular into one of the bores. The replacement barrel nut, in particular the main body of the replacement barrel nut, may be sealed in subsequent steps against the respective inner and/or outer surfaces of the composite material shell with a sealant, in particular a permanently elastic sealant. The sealant may be applied after the hardenable adhesive used to adhere the repair patch to a surface of the composite material shell has cured. The sealant may additionally or alternatively be applied to an in particular circular interface region between the repair patch and the replacement barrel nut.

In embodiments, the length (extension along the central axis) of the barrel nut may be 80 mm to 120 mm. The replacement barrel nut may have a 15 % to 45 % extension of length. In embodiments, the replacement barrel nut can have a length (extension along the central axis) of 130 mm to 150 mm.

According to a preferred embodiment, the method is executed with the wind turbine blade being installed at a hub, respectively a blade bearing, of a wind turbine, in particular under use of climbing equipment and/or an aerial vehicle. In other words, the method according to the invention may be carried out up-tower.

An industrial climber may use climbing equipment to secure him- or herself at structures neighboring the repair region, e.g. at a nacelle of the wind turbine, another rotor blade of the wind turbine and/or components of the hub. An aerial vehicle can in particular comprise an unmanned aerial vehicle like a drone or the like. As the equipment required to carry out the method according to the invention, in particular the repair patch(es) and the hardenable adhesive and corresponding application tools, is both lightweight and comparably small, it becomes possible to execute the repair in this very cost-effective and time-saving manner, in particular without the need for a crane operation.

In embodiments, the wind turbine blade may be connected to a hub, respectively a blade bearing, of a wind turbine by a multitude of bolts, in particular stud bolts, the bolts engaging the multiple fixation elements provided in the root section of the wind turbine blade. Step a2) may in particular comprise removing a specific bolt currently engaging the barrel nut of the at least one of the fixation elements and re-engaging the bolt with the replacement barrel nut.

Re-engaging the bolt with the replacement barrel nut can in particular comprise pre-tensioning the bolt to a predefined axial tension. The axial tension may be applied to the bolt by tensioning a nut on a thread of the bolt and/or can involve the use of an in particular hydraulic pre-tensioning device that creates the predefined axial tension before the nut is applied. This has the advantage that the pretension force acting on the bolt can be both accurately determined and is applied without torsion. In particular the tensioning of the bolt is executed only after the hardenable adhesive has cured, i.e. only as soon as the repair patch has the full load-bearing capacity. The pre-tensioning of the bolt may in particular executed at the hub, respectively at the blade bearing.

Finally, the method may comprise step d) Applying a surface coating and/or an over-lamination to a surface region of the composite material shell in that the repair patch has been placed and/or to a surface region of the repair patch, wherein the surface coating and/or an over-lamination is in particular applied in an overlapping manner to cover at least one boundary region between the repair patch and the composite material shell.

The coating and/or over-lamination is in particular applied to cover the particularly vulnerable boundary region and thus provides protection from environmental influences, e.g. from penetrating moisture that could negatively influence the adhesion of the repair patch. Additionally, the over-lamination provides further structural strength to the repair zone.

In a preferred embodiment an applied over-lamination can be additionally provided with one or more layers.

The surface coating may comprise a polyurethane or epoxy-based paint. Typical surface coatings may comprise the same or identical paint or varnish that is used in the manufacturing of wind turbine blades at production facilities. Alternatively, a paint or varnish that cures more quickly and/or under lower temperatures, in particular at ambient conditions, may be used. The over-lamination can be applied using wet-lamination technology, in particular in a hand-lamination process. Wet-lamination in particular means that dry fiber webs (like glass or carbon fibers) are laid onto a substrate (here the boundary region), wherein subsequently a liquid resin is applied by hand or rollers to fully saturate the fibers. The laminate is then left to cure forming a solid composite structure.

According to a second aspect of the invention, a repair patch for use in a method for repairing a wind turbine blade according to the first aspect of the invention is proposed. The repair patch comprises multiple layers of fibers laminated together, a contact surface and an opposing free surface, wherein the repair patch has at least one recess at the contact surface. The repair patch has a predefined extension along a longitudinal direction, a predefined extension along a lateral direction and a predefined thickness around the at least one recess. The repair patch is adapted and configured to be adhered to a surface of a composite material shell of a wind turbine blade with its contact surface and to receive at least one of the fixation elements provided in the composite material shell in the at least one recess to restore force transmission between the at least one of the fixation elements and the composite material shell.

The multiple layers of fibers or fiber webs of the repair patch are in particular a cured state, i.e. the resin used to laminate the layers of fibers or fiber webs is hardened. The recess may be in particular provided as a through-bore, i.e. penetrating the repair patch from the contact surface to the opposing free surface. Alternatively, the recess may comprise a blind bore that is provided in the repair patch at the contact surface but does not penetrate it.

The repair patch may be produced by lamination of the multiple layers of fibers or fiber webs to achieve an intermediate product with approximate dimensions, wherein the intermediate product can be in particular machined subsequently to predefined final dimensions. The recess can be in particular provided in the repair patch by drilling or milling. The predefined length of the repair patch is in particular dimensioned to ensure that the contact surface is sufficiently large, facilitating the efficient transfer of forces induced by the barrel nut to the composite material shell. The mechanical properties of the adhesive, in particular its response to shear stresses, are a primary influencing factor for the dimensioning of the predefined length, respectively the size of the contact surface. The predefined extension in the lateral direction is in practice limited by the spacing of the fixation elements, respectively barrel nuts, around the circumference of the root section. The recess may be in particular located centrally in the repair patch with respect to the lateral direction.

In embodiments, the contact surface might be flat and/or unbent.

In other embodiments, the contact surface can have a radius about the longitudinal direction, wherein the radius in particular corresponds to a radius of the surface of the composite material shell to that the repair patch is to be adhered.

The specific radius may be produced based on the intermediate product by machining. Alternatively or additionally the multiple layers of fibers or fiber webs may be laminated to provide the radius. Providing the contact surface with a radius generally improves the load transfer between the repair patch and the composite material shell as - especially in laterally and/or circumferentially outer regions - adhesive material is provided with a thinner layer thickness within the load path. In other words, the design of the repair patch with a radius at the contact surface allows for an improved fit between the repair patch and the composite material shell. The repair patch can in particular be tailored to each repair task by specifically adapting the radius of the contact surface to the radius of the surface of the composite material shell of the wind turbine blade to be repaired.

Depending on the radius of the surface of the composite material shell of the wind turbine blade to be repaired the radius of the contact surface may range between 800 mm and 3000 mm.

In case the repair patch is designated to be applied to an outer surface of the composite material shell, the contact surface may have an substantially concave curvature. In case the repair patch is designated to be applied to an inner surface of the composite material shell, the contact surface may have an substantially convex curvature. Both the convexly and concavely curved contact surfaces may comprise a suitable radius to correspond to a radius of the surface of the composite material shell to that the repair patch is to be adhered.

In embodiments, the repair patch may have the following dimensions:
- extension along the longitudinal direction L: 150 mm to 600 mm, in particular 200 mm to 550 mm, in particular 230 mm to 420 mm and/or
- thickness t: 8 mm to 30 mm, in particular 10 mm to 25 mm, in particular 12 mm to 20 mm and/or
- extension along a lateral direction S: 80 mm to 180 m, in particular 100 mm to 160 mm, in particular 120 mm to 150 mm.

According to a further embodiment, the repair patch may comprises at least one ramped surface at the opposing free surface, the ramped surface running in particular perpendicular to the longitudinal direction and/or wherein the at least one recess is formed in a plateau region of the repair patch in that the repair patch has its maximum thickness.

In the plateau region the repair patch can in particular have a constant thickness. The at least one ramped surface in particular neighbors the plateau region and provides a section with decreasing thickness, in particular along the longitudinal direction. A ramped design of the repair patch advantageously allows for a homogeneous distribution of mechanical stresses in the repair patch and for an efficient use of material by providing a reduced thickness in sections that are subject to less mechanical stress. In addition, the ramped design allows for a smoother transition to the surface of the composite material shell which both facilitates adhering of the repair patch to the composite material shell and facilitates the application of protective measures like over-lamination or surface coating in the boundary region(s).

The thickness of the repair patch may decrease along the respective ramped surface, in particular to reach a minimum thickness at its respective inboard and/or outboard ends (with respect to the longitudinal direction). The minimum thickness may range between 0,4 and 2 mm, in particular 0,5 mm to 1.5 mm.

Depending on the dimensions of the recess, in particular the diameter of the recess, the plateau region may have an extension along the longitudinal direction between 80 mm and 150 mm, in particular 90 mm and 140 mm.

According to another embodiment, the repair patch may comprise at least two ramped surfaces at opposing sides, in particular at longitudinally opposing sides, wherein the ramped surfaces in particular comprise a different inclination. For example, a predetermined inboard ramped surface may have a steeper inclination than a predetermined outboard ramped surface.

A steeper inclination of the inboard ramped surface helps to reduce the amount of installation space required in the longitudinal direction, which is particularly important for an application of the repair patch in a root section of the composite material shell in that the available axial installation space is limited. At the outboard ramped surface a relatively flatter inclination is beneficial to further smoothen the transition to the surface of the composite material shell.

In embodiments, the following ranges can be particularly beneficial for the inboard and/or outboard ramped surfaces inclination:
- inboard ramped surface: 12° to 25°, in particular 14° to 20°
- outboard ramped surface: 3,5 ° to 15 °, in particular 4 ° to 12°.

In embodiments, at least one of the ramped surfaces, in particular the inboard ramped surface, may be provided with a segmentation into two or more sub-ramped surfaces, wherein the sub-ramped-surfaces may have a different inclination. The resulting inclination angle of the respective inboard and/or outboard ramped surface may be defined as a mean inclination angle of the two or more sub-ramped surfaces,

According to yet another embodiment, at least one layer of the multiple layers of fibers or fiber webs may comprise an unidirectional, a bi-axial and/or a tri-axial arrangement of fibers.

Unidirectionally arranged fibers may in particular extend along or parallel to the longitudinal direction. A bi-axial arrangement of fibers may in particular comprise a first subset of fibers that extend under a first acute angle to the longitudinal direction, for example +45°, and a second subset of fibers that extend under a second acute angle to the longitudinal direction, for example -45°. A tri-axial arrangement of fibers may in particular combine said unidirectional and bi-directional arrangements of fibers, in particular in a common fiber web.

One or more fiber webs with a tri-axial arrangement of fibers are in particular used in the repair patch to support the fixation element, respectively the barrel nut, received in the recess. The unidirectional fibers within the tri-axial arrangement are in particular aligned parallel to a force vector that represents the compressive load of the pretension of the fixation element, respectively the barrel nut. One or more fiber webs with a bi-axial arrangement of fibers are in particular used to distribute the forces evenly to the contact surface with that the repair patch is bonded to the surface of the composite material shell.

In embodiments, the repair patch may comprise one or more fiber webs with a bi-axial arrangement of fibers that are arranged at or close to the contact surface and/or one or more fiber webs with a tri-axial arrangement of fibers that are arranged remote from the contact surface and/or close to the opposing free surface.

During production of the repair patch by lamination, the contact surface may be laminated on at least one layer of peel ply. Peel ply is a material that is in particular used to roughen composite structures during lamination. After the composite structure has hardened, it can be removed by hand. The result is a rough, clean surface for subsequent bonding. The repair patch may be provided to the repair site with the peel ply still attached to the contact surface. Before the repair patch is placed on the surface of the composite material shell, the peel ply is peeled off to expose the contact surface. This ensures that the contact surface is optimally adapted for the bonding to the surface of the composite material shell, in particular for optimum adhesive adhesion.

According to a third aspect of the invention, a wind turbine blade comprising a composite material shell with a root section and a tip section is proposed. The root section comprises multiple circumferentially distributed fixation elements arranged within the composite material shell, wherein the fixation elements are adapted for a connection of the wind turbine blade to a hub, respectively a blade bearing, of a wind turbine. The wind turbine blade comprises at least one repair patch according to the second aspect of the invention that is adhered to a surface of the composite material shell, wherein at least one of the fixation elements protrudes at least partially into the recess of the repair patch.

It goes without saying that a wind turbine comprising one or more wind turbine blades according to the invention is also considered to be according to the invention.

The embodiments and features described with reference to the apparatuses of the present invention, i.e. the repair patch and the wind turbine blade, apply mutatis mutandis to the method of the present invention and vice versa.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows an isometric view of a wind turbine;
Fig. 2 shows an isometric view of a rotor hub of a wind turbine;
Fig. 3 shows an isometric longitudinal section of a wind turbine blade root;
Fig. 4 shows a longitudinal section of a connection of a wind turbine blade root to a blade bearing of a rotor hub;
Fig. 5 shows an isometric view of a wind turbine blade root with laminate damage around a number of fixation elements;
Fig. 6 shows a longitudinal section of a connection of a wind turbine blade root to a blade bearing of a rotor hub with laminate damage;
Fig. 7 shows an isometric view of a wind turbine blade root with replacement fixation elements;
Fig. 8 shows an isometric view of a wind turbine blade root with repair patches applied to the outer surface of the composite material shell;
Fig. 9 shows a longitudinal section of one of the laminate damages repaired with a repair patch at the outer surface of the composite material shell;
Fig. 10 shows a longitudinal section of one of the laminate damages repaired with a repair patch and over-lamination at the outer surface of the composite material shell;
Fig. 11 shows a longitudinal section of one of the laminate damages repaired with a repair patch at the inner surface of the composite material shell;
Fig. 12 shows a top view of a repair patch;
Fig. 13a shows cross-section A-A according to Fig. 12 in a first embodiment;
Fig. 13b shows cross-section A-A according to Fig. 12 in a second embodiment;
Fig. 13c shows cross-section A-A according to Fig. 12 in a third embodiment with peel ply on the contact surface;
Fig. 14 shows a top view of a repair patch applied to a surface of the composite material shell of the wind turbine blade with an indication of a load path and
Fig. 15 - Fig. 19 show flow charts of different embodiments of the method according to the invention.

In the Figures, like reference numerals designate like or functionally equivalent elements, unless otherwise indicated.

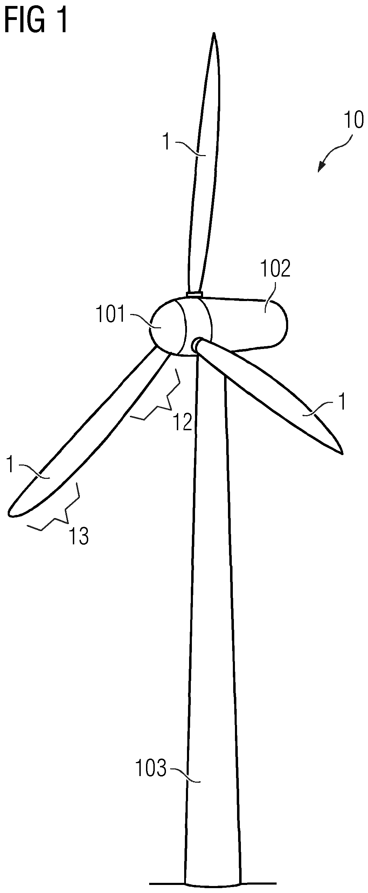

**Fig. 1** shows a schematic representation of a typical wind turbine 10, that can be both adapted for offshore and/or onshore use. The wind turbine 10 comprises a tower 103, a nacelle 102 that may house a gearbox, generator and/or electrical equipment, and a hub 101 that is rotatably mounted to the nacelle 102. To the hub 101 a number of wind turbine blades 1, for example three wind turbine blades 1, are connected. The wind turbine blades 1 may be in particular mounted to blade bearings 102 of the hub 101 that allow for a pitch adjustment of the blades 1. Each blade 1 comprises a tip section 13 at a radially outer, respectively outboard, end and a root section 12 at a radially inner, respectively inboard, end. The blades 1 are connected to the hub 101, respectively the blade bearings 102 at the hub 101, at their respective root sections 12.

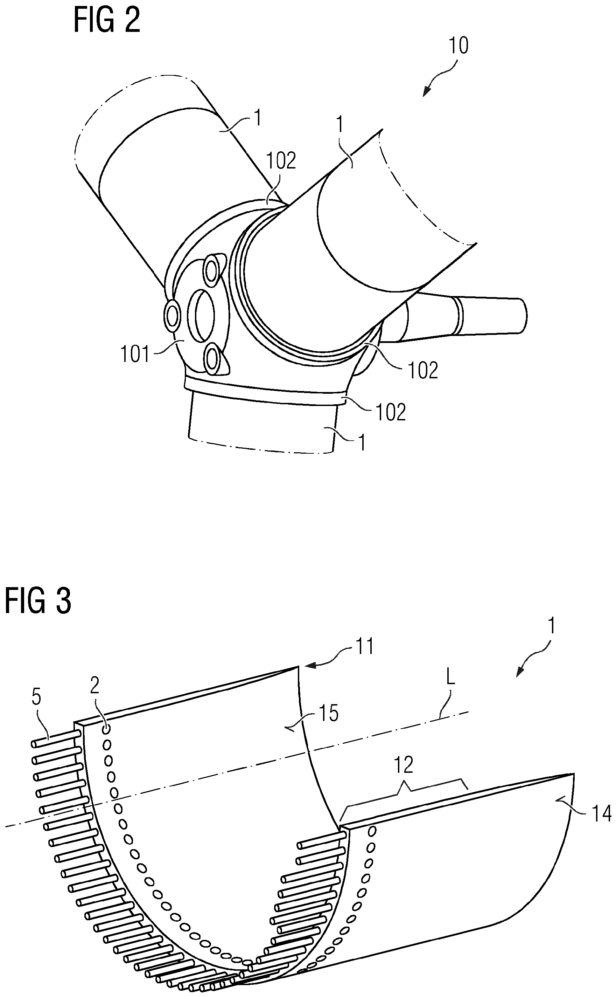

The connection of the root sections 12 of the blades 1 to the hub 101, respectively to the blade bearings 102 at the hub 101, is shown in more detail in **Fig. 2****.**

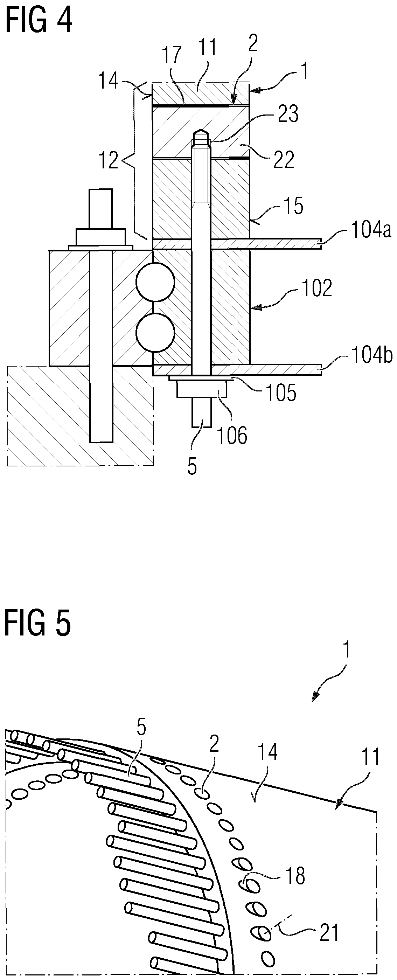

**Fig.** 3 shows an isometric longitudinal section of a wind turbine blade 1 root section 12 in an uninstalled state to discuss in more detail how the blade 1 may be connected to the hub 101, respectively to a blade bearing 102 at the hub 101. The longitudinal direction of the blade 1, respectively the composite material shell 11, is indicated with L. The root section 12 comprises multiple circumferentially distributed fixation elements 2, in particular barrel nuts 2, arranged within a composite material shell 11 of the wind turbine blade 1. The fixation elements 2, in particular barrel nuts 2, are in particular provided with an equal angular spacing over the circumference of the root section 12. The fixation elements 2, in particular barrel nuts 2, are received in corresponding receptacles 17 (see Fig. 4), in particular bores, in particular through-bores, in the composite material shell 11. The composite material shell 11 has an outer surface 14 and an inner surface 15. The through-bores forming the respective receptacles may in particular penetrate the composite material shell 11 from the outer surface 14 to the inner surface 15.

The fixation elements 2, in particular barrel nuts 2, each comprise a least one threaded fixation region 23 (see Fig. 4) that extends perpendicularly to a central axis 21 (see Fig. 5) of the fixation element 2, in particular barrel nut 2. The threaded fixation region 23 is aligned with a longitudinal bore in the composite material shell 11 that is open to the inboard end of the blade 1. Through the longitudinal bore a stud bolt 5 is inserted that on one end is screwed into the threaded fixation region 23 of the fixation element 2, in particular barrel nut 2, and on the other end fixable to the hub 101, or the blade bearing 102 respectively. The fixation elements 2, in particular barrel nuts 2, are in particular received loosely in the receptacles 17, respectively bores 17, of the composite material shell 11.

The combination of a barrel nut 2 and a bolt 5, in particular stud bolt 5, forms a so called T-bolt connection.

Now referring to **Fig. 4** that shows a longitudinal section of a connection of a wind turbine 1 blade root 12 to a blade bearing 102 of a rotor hub, in particular to an inner ring of the blade bearing 102. The fixation element 2, in particular barrel nut 2, provided within the receptacle 17 or bore 17 of the composite material shell 11 engages one end of a bolt 5, in particular stud bolt 5, that is screwed into a threaded fixation region 23 provided in a main body 22 of the fixation element 2, respectively barrel nut 2. The threaded fixation region 23 extends substantially perpendicular to a central axis of the main body 22. An opposing end of the bolt 5, in particular stud bolt 5, is provided with a nut 106 that abuts at the blade bearing 102, in particular the blade bearing 102 inner ring, and thus introduces a pretension force into the bolt 5. The nut 106 may be provided with one or more washers 105 to distribute compressional loads more evenly. An inboard end of the blade root 12 abuts against the blade bearing 102, in particular the blade bearing 102 inner ring, wherein in particular a first reinforcement plate 104a may be provided in between, in particular to distribute compressional loads and/or to avoid direct contact between the inboard end of the blade root 12 and the blade bearing 102. A second reinforcement plate 104b may be provided between the blade bearing 102 and the nut 106 or between the blade bearing 102 and the washer, respectively. The first and/or second reinforcement plates 104a,104b may be provided with a multitude of circumferentially spaced through-bores that match with the positioning and diameter of the bolts 5 along the circumference of the blade root 12. The first and/or second reinforcement plates 104a,104b may be essentially circular ring-shaped with an outer diameter corresponding to an outer diameter of the blade root 12.

Now referring to **Fig. 5** that shows an isometric view of a wind turbine blade root 12, wherein the composite material shell 11 exhibits a laminate damage 18 around a number of fixation elements 2. The laminate damage 18 is in particular present at the inboard sides of the receptacles 17, respectively bores 17, that receive the fixation elements 2 / barrel nuts 2. Specifically, such laminate damage 18 involves a compromised laminate structure in which a certain number of fibers and/or fiber webs have delaminated. As the laminate structure is weakened at the inboard sides of the receptacles 17 / bores 17, the pretension of the respective bolts 5 is reduced or even collapses completely. Such laminate damage 18 can both develop at the surface 14,15 and in a volume inside the composite material shell 11 adjacent to the at least one fixation element 2.

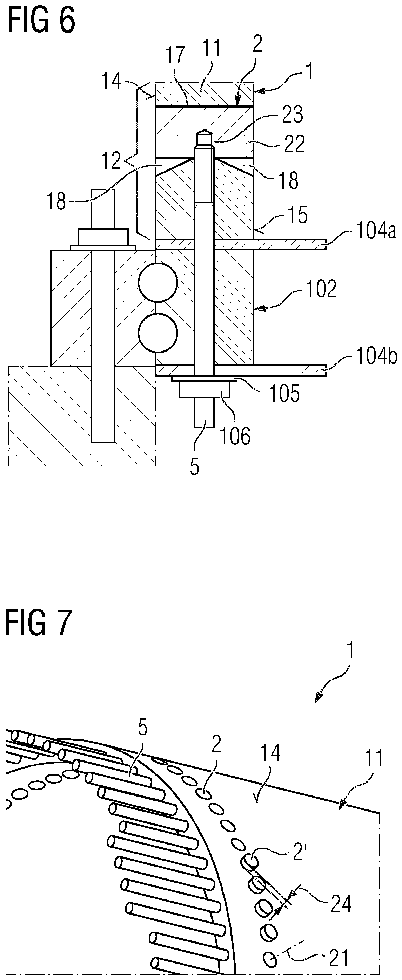

Depending on the failure mode, the laminate structure of the composite shell 11 may be damaged to a certain depth beneath the respective inner 15 and/or outer surfaces 15, which is shown in **Fig. 6** in the form of a volume-type laminate damage 18 that may "taper" with increasing depth.

Conventional methods for repairing such laminate damage 18 involved removing the blade 1 from the hub 101, lowering it with a crane and repairing it off-tower. The method according to the present invention however allows to execute the repair in a quick, efficient and cost-effective manner up-tower.

**Fig. 7** shows an isometric view of a wind turbine blade root 12 with replacement fixation elements 2', in particular replacement barrel nuts 2', that replace the original fixation elements 2 from such receptacles 17, respectively bores 17, that are subject to laminate damage 18 (see Fig. 5). The replacement fixation elements 2', in particular replacement barrel nuts 2', have a longer extension along the central axis 21 than the original fixation elements 2 to protrude over a surface 14 of the composite material shell 11 with a projection section 24. The length of the projection section 24 may be, for example, between 10 mm and 60 mm, in particular between 20 and 50 mm.

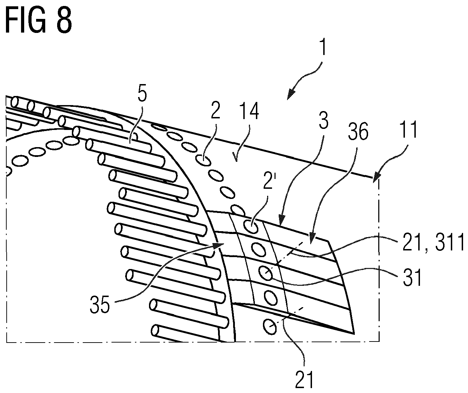

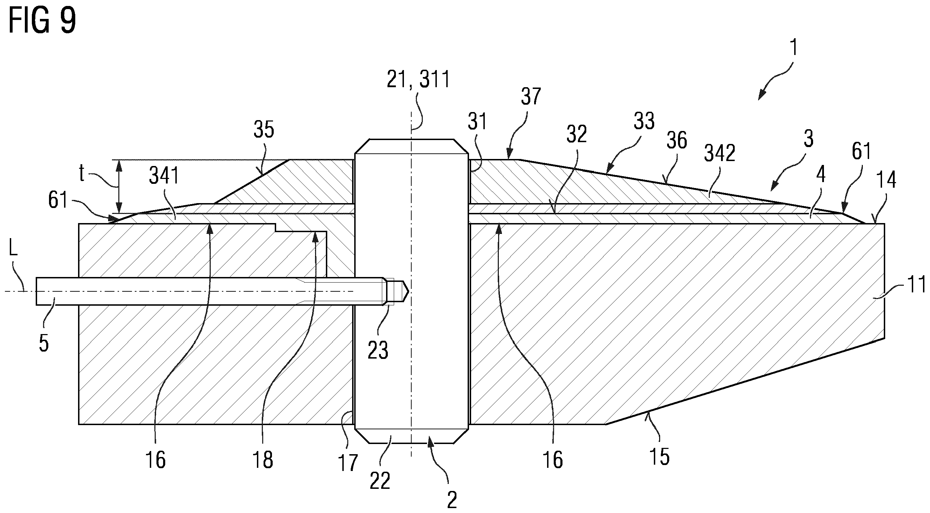

Now referring to **Fig. 8** that shows an isometric view of a wind turbine blade root 12 with a number of repair patches 3 applied to a surface 14,15, in particular an outer surface 14, of the composite material shell 11. In other embodiments one or more repair patches 3 may be likewise applied to an inner surface 15 of the composite material shell 11 or to both the outer surface 14 and the inner surface 15. In other words, Fig. 8 shows a state of the blade root 12 after the method according to the invention has been carried out. One or more of the repair patches 3 comprise a contact surface 32 (see Fig. 9) and at least one recess 31 that corresponds to at least one dimension of the at least one of the fixation elements 2,2'. The recess 31 in particular can be a bore provided in the repair patch 3 and has a diameter that equals the diameter of a respective fixation element 2,2', in particular of a respective barrel nut 2,2'.

The repair patch 3 is adhered to a surface 14,15 of the composite material shell 11 with its contact surface 32 and positioned so that a central axis 311 of the recess 31 is aligned with the central axis 21 of the fixation element 2,2', respectively barrel nut 2,2'. The projection section 24 of the fixation element 2,2', respectively barrel nut 2,2', is received in the recess 31 of the repair patch 3. The projection section 24 of the fixation element 2,2', respectively barrel nut 2,2', protrudes at least partially into the recess 31 of the repair patch 3. A longitudinal direction of the repair patch 3 in particular runs in or parallel to the longitudinal direction L of the blade 1.

The repair patch 3 is in particular adhered to the surface 14,15 of the composite material shell 11 by a hardenable adhesive 4 (see Fig. 9 to Fig. 10). The hardenable adhesive 4 may be applied to a repair region 16 of the surface 14,15 of the composite material shell 11 (see Fig. 9 to Fig. 10) and/or to the contact surface 32 of the repair patch 3.

**Fig. 9** shows a longitudinal section of one of the laminate damages 18, in particular at the outer surface 14 of the composite material shell 11, that has been repaired with a repair patch 3 according to the invention and/or by carrying out the method according to the invention. The hardenable adhesive 4 is both applied to the repair region 16 on the surface 14 of the composite material shell 11 and fills a volume-type damage 18 in a region of the receptacle 17, respectively the bore 17, neighboring the fixation element 2,2' at its inboard side.

The repair patch 3 has a free surface 33 radially opposite the contact surface 32. At the free surface 33 the repair patch 3 in particular has at least two ramped surfaces 35,36 at longitudinally L opposing sides, wherein the ramped surfaces 35,36 in particular comprise a different inclination. An inboard ramped surface 35 may have a steeper inclination than an outboard ramped surface 36. Longitudinally between the two ramped surfaces 35,36 a plateau region 37 is formed, in that the repair patch 3 has its maximum thickness t. The recess 31 is in particular formed in the plateau region 37. The inboard ramped surface 35 is in particular segmented into two or more sub-ramped surfaces, wherein the sub-ramped-surfaces have a different inclination. Viewed from the central axis 311 of the recess, a relatively near sub-ramped-surface may have a steeper inclination than a relatively remote sub-ramped-surface.

The repair patch 3 comprises multiple layers of fiber webs 34,341,342 laminated together, wherein a first group of layers of fiber webs 341 may comprise a different arrangement of fibers and/or fiber types than a second group of layers of fiber webs 342. The first group of layers of fiber webs 341 may in particular be located at the contact surface 32, the second group of layers of fiber webs 342 may in particular be located at the free surface 33, respectively away from the contact surface 32. The first group of layers of fiber webs 341 may in particular comprise a bi-axial arrangement of fibers and/or the second group of layers of fiber webs 342 may in particular comprise a tri-axial arrangement of fibers. The first and second groups of layers of fiber webs 341,342 may be stacked on each other and laminated together.

The contact surface 32 of the repair patch 3 may in particular be provided with a radius r about the longitudinal direction L that corresponds to a radius of the outer surface 14 of the composite material shell 11, wherein the curvature of the contact surface 32 may in particular be substantially concave.

At an outer edge of the repair patch 3 a boundary region 61 between the repair patch 3 and the composite material shell 11 is formed, in that traces of adhesive 4 may eventually be squeezed out.

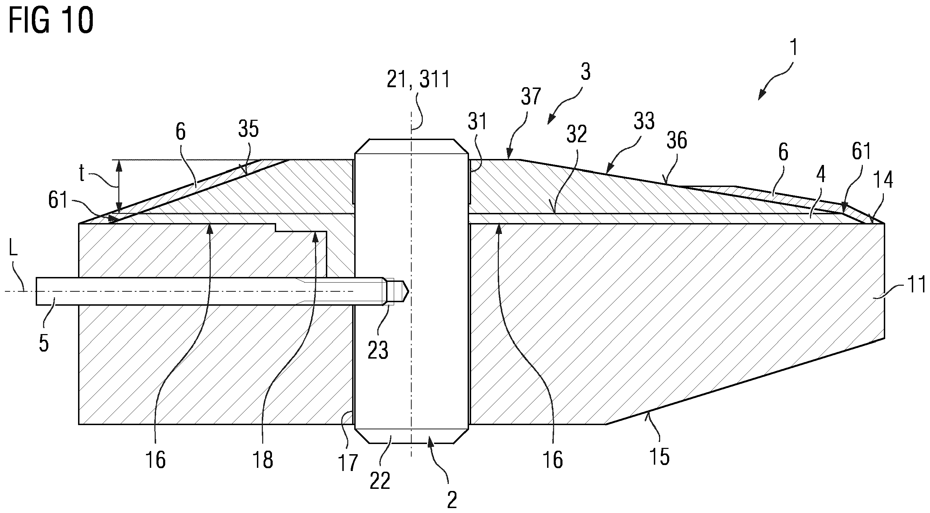

**Fig. 10** shows a longitudinal section of one of the laminate damages 18, in particular at the outer surface 14 of the composite material shell 11, that has been repaired with a repair patch 3 according to the invention and/or by carrying out the method according to the invention, wherein the boundary region 61 is provided with an over-lamination 6 to provide protection from environmental influences, e.g. from moisture that could otherwise penetrate the repair region 16. The over-lamination 6 is applied in an overlapping manner at least at an inboard and/or outboard edge of the repair patch 3 so that it extends partially on the free surface 33 of the repair patch 3 and partially on the surface of the composite material shell 11. The over-lamination 6 is in particular created using wet-lamination, especially hand-lamination, where dry fiber webs are placed on a substrate, then saturated with liquid resin by hand or rollers and then cured.

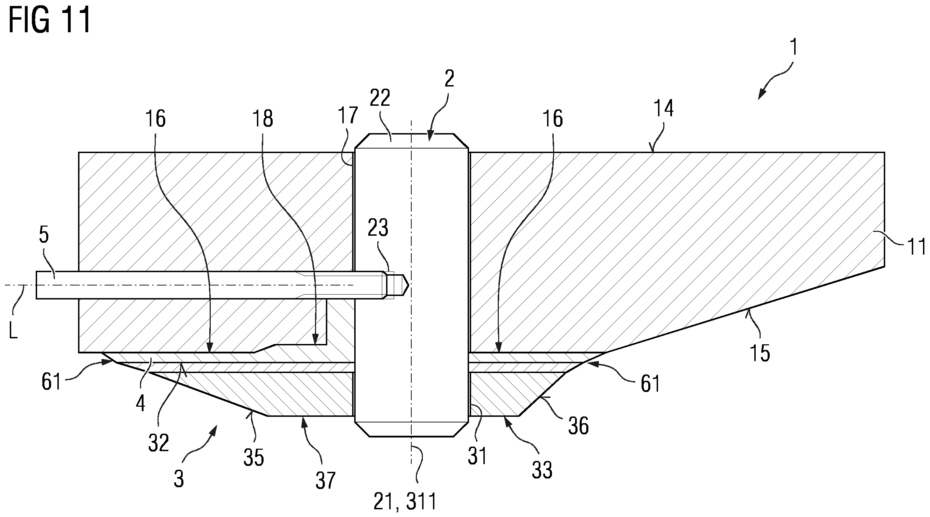

**Fig. 11** shows a longitudinal section of one of the laminate damages 18, in particular at the inner surface 15 of the composite material shell 11, that has been repaired with a repair patch 3 according to the invention and/or by carrying out the method according to the invention. Apart from the fact that the repair patch 3 is arranged at the inner surface 15 of the composite material shell 11, Fig. 11 corresponds to Fig. 9, so that all the features discussed in this regard also apply to Fig. 11. The contact surface 32 of the repair patch 3 may in particular be provided with a radius r about the longitudinal direction L that corresponds to a radius of the inner surface 15 of the composite material shell 11, wherein the curvature of the contact surface 32 may in particular be substantially convex.

It goes without saying that a laminate damage 18 can be repaired by applying individual repair patches 3 both at the inner surface 15 and at the outer surface 14 of the composite material shell 11, which corresponds, for example, to a combination of the embodiments of Fig. 9 or Fig. 10 with Fig. 11.

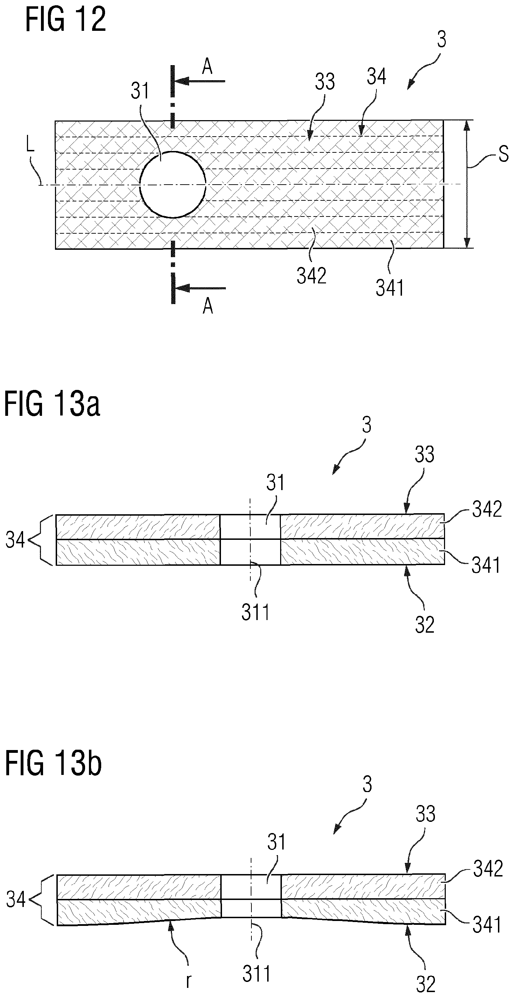

**Fig. 12** shows a top view of a repair patch 3 from the free surface 33, wherein the multiple layers of fiber webs 34 are presented semi-transparently so that the structure and layering of the fiber arrangements can be understood. The second group of layers of fiber webs 342 may in particular be located at the free surface 33 and the first group of layers of fiber webs 341 may in particular be located at the contact surface 32, i.e. away from the free surface 33. As it can be seen, the first group of layers of fiber webs 341 may comprise a bi-axial arrangement of fibers with a first subset of fibers that extend under a first acute angle to the longitudinal direction L, for example +45°, and a second subset of fibers that extend under a second acute angle to the longitudinal direction L, for example -45°. The second group of layers of fiber webs 342 may comprise a tri-axial arrangement of fibers which in turn comprises a bi-directional arrangement of fibers that is reinforced with a unidirectional arrangement of fibers running in or parallel to the longitudinal direction L.

In the shown embodiment, the recess 31 penetrates the repair patch 3 from the contact surface 32 to the free surface 33. In other embodiments, that are not shown in the Figures, the recess 31 may be provided as a blind bore at the contact surface 32, that does not break through the free surface 33.

**Fig. 13a** to **Fig. 13c** show cross-sectional views through sectional plane A-A according to Fig. 12 of different embodiments of the repair patch 13. While according to Fig. 13a the contact surface 32 is substantially flat and/or unbent, Fig. 13b shows an embodiment with the contact surface 32 having a radius r about the longitudinal direction (extending into the drawing plane), wherein the radius r in particular corresponds to a radius of the surface of the composite material shell to that the repair patch 3 is to be adhered. In the shown embodiment, the contact surface 32 has a concave curvature, in other embodiments, the curvature might however be convex as well.

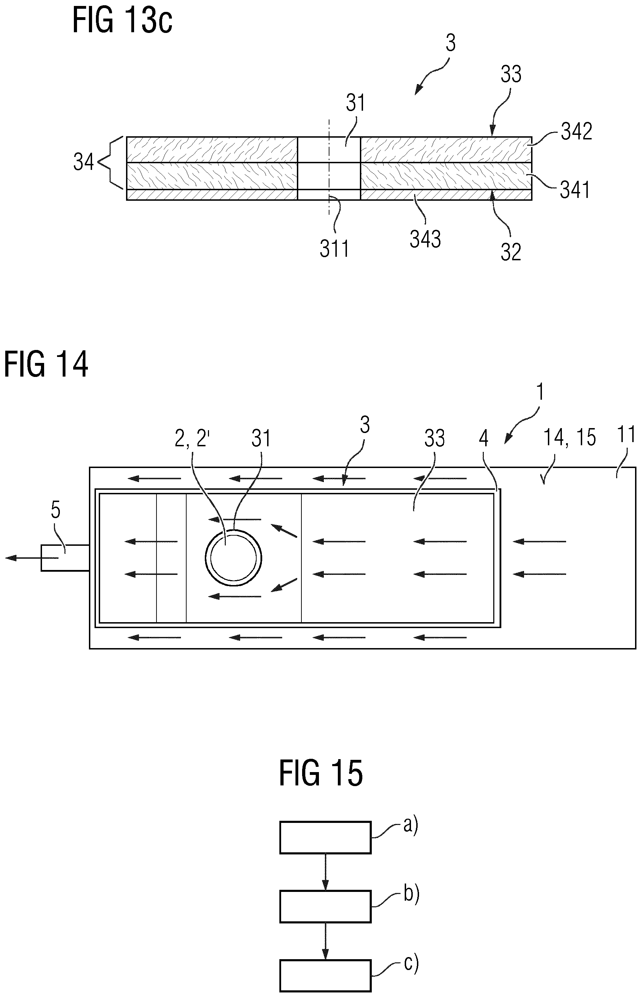

The embodiment of Fig. 13c corresponds to that of Fig. 13a, but with a protective layer 343, in particular a layer of peel ply 343, arranged on the contact surface 32. Before the repair patch 3 is adhered to the surface of the composite material shell, the protective layer 343, in particular the peel ply 343, is to be peeled off to expose the contact surface 32.

Referring to **Fig. 14** now that shows a top view of a repair patch 3 applied to a surface 14,15 of the composite material shell 11 of the wind turbine blade 1 with a load path illustrated by schematic force vectors represented by arrows.

With the repair patch 3 fully bonded to the composite material shell 11 a viable load path from the at least one of the fixation elements 2,2' into the composite material shell 11 is restored. A portion of the load that is induced by the fixation element 2,2' passes through the repair patch 3 and is then transferred to the composite material shell 11, in particular through the contact surface 32 with that the repair patch 3 is bonded by the adhesive to the composite material shell 11.

Beneficially, the method according to the invention and/or the repair patch 3 according to the invention allows to restore the load bearing capacity of the laminate in an area around the fixation elements 2,2', respectively barrel nuts 2,2', so that original specifications are again met or even exceeded.

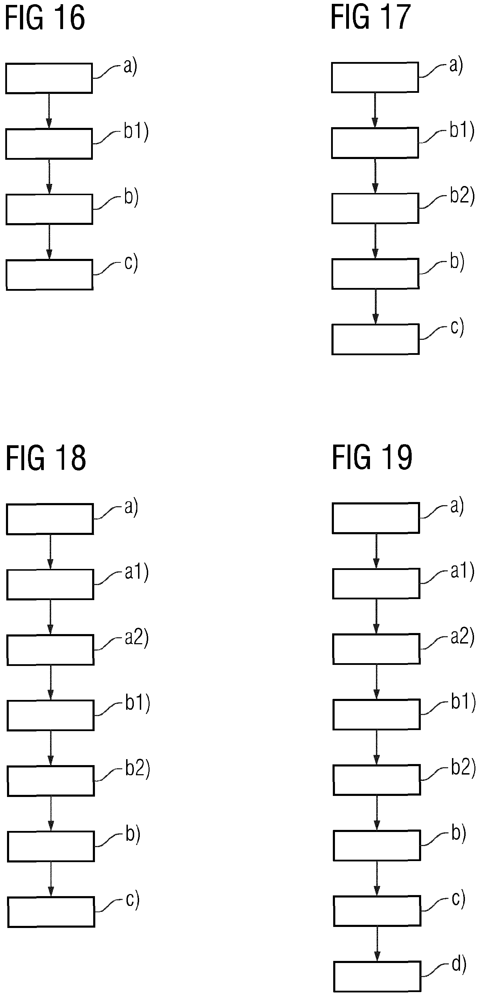

**Fig. 15** to **Fig. 19** show flow charts of different embodiments of the method according to the invention. To avoid repetition, the individual method steps are not repeated verbatim, but reference is made to the general part of the description.

Although the present invention has been described in accordance with preferred embodiments, it is obvious for the person skilled in the art that modifications are possible in all embodiments.

### Reference Numerals:

- 1: wind turbine blade
- 11: composite material shell
- 12: root section
- 13: tip section
- 14: outer surface
- 15: inner surface
- 16: repair region
- 17: receptacle, bore
- 18: laminate damage

- 2: fixation element, barrel nut
- 2': replacement fixation element, replacement barrel nut
- 21: central axis
- 22: main body
- 23: fixation region, thread
- 24: projection section

- 10: wind turbine
- 101: hub
- 102: nacelle
- 102: blade bearing
- 103: tower
- 104a,b: reinforcement plate
- 105: washer
- 106: nut

- 3: repair patch
- 31: recess
- 311: central axis of the recess
- 32: contact surface
- 33: opposing free surface
- 34: fiber webs of the repair patch
- 341: first group of layers of fiber webs
- 342: second group of layers of fiber webs
- 343: protective layer / peel ply
- 35: first ramped surface
- 36: second ramped surface

- 4: adhesive
- 5: bolt, stud bolt
- 6: over-lamination
- 61: boundary region

- L: longitudinal direction
- S: lateral direction
- r: radius
- t: thickness

## Claims

1. Method for repairing a wind turbine blade (1) comprising a composite material shell (11) with a root section (12), wherein the root section (12) comprises multiple circumferentially distributed fixation elements (2) arranged within the composite material shell (11), wherein the fixation elements (2) are adapted for a connection of the wind turbine blade (1) to a hub (101), or to a blade bearing (102), of a wind turbine (10), and wherein the composite material shell (11) in particular shows a laminate damage (18) around at least one of the fixation elements (2),
the method comprising the steps:
a) providing a repair patch (3) comprising a contact surface (32) and at least one recess (31) that corresponds to at least one dimension of the at least one of the fixation elements (2);
b) placing the repair patch (3) on a surface (14,15) of the composite material shell (11), wherein a central axis (311) of the recess (31) is aligned with a central axis (21) of the at least one of the fixation elements (2) with the fixation element (2) protruding at least partially into the recess (31) of the repair patch (3);
c) adhering the repair patch (3) to the surface (14,15) of the composite material shell (11) to restore force transmission between the at least one of the fixation elements (2) and the composite material shell (11) by providing a load path through the repair patch (3).

2. Method according to claim 1, wherein the repair patch (3) is placed on an inner surface (15) and/or an outer surface (14) of the composite material shell (11).

3. Method according to claim 1 or 2, comprising step b1) Applying a hardenable adhesive (4) to a repair region (16) of the surface (14,15) of the composite material shell (11), the repair region (16) neighboring the at least one of the fixation elements (2) and/or applying a hardenable adhesive (4) to the contact surface (32) of the repair patch (3), wherein the hardenable adhesive (4) in particular comprises a 2K-adhesive, in particular an epoxy-based adhesive, wherein step b1) is in particular executed before step b).

4. Method according to claim 3, wherein the hardenable adhesive is applied with a cartridge gun or spray gun.

5. Method according to any of the preceding claims, comprising
step b2) processing a surface (14,15) of the composite material shell (11) in a repair region (16) neighboring the at least one of the fixation elements (2), in particular wherein surface processing includes grinding the surface (14,15) and/or the removal of damaged remains of a laminate structure of the composite material shell (11),
wherein step b2) is in particular executed before step b).

6. Method according to any of the preceding claims,
wherein the at least one of the fixation elements (2, 2') comprises at least one barrel nut (2, 2'), the barrel nut (2, 2') comprising a main body (22) that is received in a respective receptacle (17) within the composite material shell (11) and at least one fixation region (23) in the main body (22), in particular a threaded fixation region (23), the fixation region (23) in particular extending perpendicular to the central axis (21) of the barrel nut (2, 2'),
wherein step b) comprises receiving a projection section (24) of the barrel nut (2, 2') that protrudes over a surface (14,15) of the composite material shell (11) in the recess (31) of the repair patch (3).

7. Method according to claim 6, comprising
step a1) providing a replacement barrel nut (2') having a longer extension along the central axis (21) than a barrel nut (2) currently comprised by the at least one of the fixation elements (2);
step a2) replacing the barrel nut (2) with the replacement barrel nut (2'), so that the replacement barrel nut (2') protrudes over a surface (14,15) of the composite material shell (11) with the projection section (24),
wherein in particular steps a1) and a2) are executed before step b).

8. Method according to any of the preceding claims, wherein the method is executed with the wind turbine blade (1) being installed at a hub (101), respectively a blade bearing (102), of a wind turbine (10), in particular under use of climbing equipment and/or an aerial vehicle.

9. Method according to claim 7 or 8,
wherein the wind turbine blade (1) is connected to a hub (101), respectively a blade bearing (102), of a wind turbine (10) by a multitude of bolts (5), in particular stud bolts (5), the bolts (5) engaging the multiple fixation elements (2) provided in the root section (12) of the wind turbine blade (1),
wherein in particular step a2) comprises removing a specific bolt (5) currently engaging the barrel nut (2) of the at least one of the fixation elements (2) and re-engaging the bolt (5) with the replacement barrel nut (2').

10. Method according to any of the preceding claims, comprising step
d) Applying a surface coating and/or an over-lamination (6) to a surface region of the composite material shell (11) in that the repair patch (3) has been placed and/or to a surface region of the repair patch (3), wherein the surface coating and/or an over-lamination (6) is in particular applied in an overlapping manner to cover at least one boundary region (61) between the repair patch (3) and the composite material shell (11).

11. Repair patch (3) for use in a method for repairing a wind turbine blade (1) according to any of the preceding claims, comprising multiple layers of fiber webs (34, 341, 342) laminated together, a contact surface (32) and an opposing free surface (33), wherein the repair patch (3) has at least one recess (31) at the contact surface (32),
the repair patch (3) having a predefined extension along a longitudinal direction (L), a predefined extension along a lateral direction (S) and a predefined thickness (t) around the at least one recess (31),
wherein the repair patch (3) is adapted and configured to be adhered to a surface (14,15) of a composite material shell (11) of a wind turbine blade (1) and to receive at least one of the fixation elements (2,2') provided in the composite material shell (11) in the at least one recess (31) to restore force transmission between the at least one of the fixation elements (2) and the composite material shell (11).

12. Repair patch (13) according to claim 11,
wherein the repair patch (13) comprises at least one ramped surface (35,36) at the opposing free surface (33), the ramped surface (35,36) running in particular perpendicular to the longitudinal direction (L) and/or wherein the at least one recess (31) is formed in a plateau region (37) of the repair patch (3) in that the repair patch (3) has its maximum thickness (t).

13. Repair patch (13) according to claim 11 or 12, comprising at least two ramped surfaces (35,36) at opposing sides, in particular at longitudinally (L) opposing sides, wherein the ramped surfaces (35,36) in particular comprise a different inclination, in particular wherein a predetermined inboard ramped surface (35) has a steeper inclination than a predetermined outboard ramped surface (36).

14. Repair patch (13) according to any of the claims 11 to 13, wherein at least one layer of the multiple layers of fiber webs (34, 341, 342) comprises an unidirectional, a bi-axial and/or a tri-axial arrangement of fibers.

15. Wind turbine blade (1) comprising a composite material shell (11) with a root section (12) and a tip section (13), wherein the root section (12) comprises multiple circumferentially distributed fixation elements (2) arranged within the composite material shell (11), wherein the fixation elements (2) are adapted for a connection of the wind turbine blade (1) to a hub (101), respectively a blade bearing (102), of a wind turbine (10),
**characterized in that** a repair patch (13) according to any of the claims 11 - 14 is adhered to a surface (14,15) of the composite material shell (11) and at least one of the fixation elements (2) protrudes at least partially into the recess (31) of the repair patch (3).
